(19) Europäisches Patentamt
European Patent Office
Office européen des brevets

(11) **EP 4 557 423 A1**

(12) **EUROPEAN PATENT APPLICATION**

(43) Date of publication:
**21.05.2025 Bulletin 2025/21**

(21) Application number: **24211493.2**

(22) Date of filing: **07.11.2024**

(51) International Patent Classification (IPC):
$H01M\ 10/0525^{(2010.01)}$  $H01M\ 50/40^{(2021.01)}$
$H01M\ 50/42^{(2021.01)}$  $H01M\ 50/449^{(2021.01)}$
$H01M\ 50/491^{(2021.01)}$  $H01M\ 50/494^{(2021.01)}$
$H01M\ 50/497^{(2021.01)}$  $H01M\ 50/417^{(2021.01)}$

(52) Cooperative Patent Classification (CPC):
H01M 50/491; H01M 10/0525; H01M 50/417;
H01M 50/449; H01M 50/486; H01M 50/494;
H01M 50/497

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.11.2023 KR 20230157033**

(71) Applicants:
• **SK Innovation Co., Ltd.**
**Seoul 03188 (KR)**
• **SK ie technology Co., Ltd.**
**Jongno-gu
Seoul
03188 (KR)**

(72) Inventors:
• **AHN, Jun Hwan**
**34124 Daejeon (KR)**
• **KIM, Jun Hyung**
**34124 Daejeon (KR)**
• **LEE, Chang Hee**
**34124 Daejeon (KR)**
• **JI, Sang Yoon**
**34124 Daejeon (KR)**

(74) Representative: **Prüfer & Partner mbB
Patentanwälte · Rechtsanwälte
Sohnckestraße 12
81479 München (DE)**

(54) **HYBRID SEPARATOR AND LITHIUM SECONDARY BATTERY INCLUDING THE SAME**

(57) The present disclosure relates to a hybrid separator and a lithium secondary battery including the hybrid separator. As an exemplary embodiment, a lithium secondary battery includes a negative electrode, a positive electrode, a separator disposed between the negative electrode and the positive electrode, and a liquid electrolyte, wherein the separator is a hybrid separator including a porous substrate and a lithium ion conductive flexible polymer layer disposed on at least one surface of the porous substrate, and a lithium ionic conductivity of the hybrid separator is $10^{-4}$ to $10^{-2}$ S/cm. The hybrid separator according to the present disclosure includes the flexible polymer layer, such that the mechanical strength of the separator is excellent, and the formation of lithium dendrites is significantly reduced during a charging and discharging process.

EP 4 557 423 A1

## Description

### TECHNICAL FIELD

The following disclosure relates to a hybrid separator and a lithium secondary battery including the same.

### BACKGROUND

Recently, the capacity and size of lithium secondary batteries have been increased in order to be applied to electric vehicles and the like. In order to achieve high capacity for the same volume, thinning is required, and ensuring battery safety is becoming significantly important.

Typically, the lithium secondary battery includes a separator disposed between a positive electrode and a negative electrode, and a polyolefin-based porous film is used as the separator. The polyolefin-based porous film has pores through which lithium ions may pass, but during a repeated charging and discharging process, a lithium ion displacement phenomenon occurs in the polyolefin-based porous film, resulting in the formation of lithium dendrites (Li dendrites) in the negative electrode. The formed lithium dendrites may cause various problems in the battery.

Specifically, when lithium dendrites are formed, the lithium dendrites grow in a sharp needle-like shape from the negative electrode. When the grown lithium dendrites block the pores of the polyolefin-based porous film or perforate the polyolefin-based porous film, the grown lithium dendrites may cause internal short circuits in the battery. As a result, safety problems such as fire may occur.

In addition, when a surface of newly growing lithium dendrites is exposed to an electrolyte, the electrolyte and lithium dendrite with a high specific surface area are easily involved in electrochemical side reactions, resulting in rapid depletion of the electrolyte and deterioration of the battery life characteristics. In addition, a volume of the entire battery changes due to a change in electrode thickness that occurs as the lithium dendrites are formed, resulting in deterioration of the dimensional stability of the battery.

In order to solve these problems, various techniques have been proposed to suppress the growth of lithium dendrites; however, there is a lack of development of techniques that may solve the problems caused by the lithium dendrites while improving the mechanical properties and ionic conductivity of the separator.

From another perspective, all-solid-state batteries that use a solid electrolyte between a positive electrode and a negative electrode have been studied. The all-solid-state battery necessarily requires a solid electrolyte to transport lithium ions. The solid electrolyte is broadly divided into an organic (polymer) electrolyte and an inorganic electrolyte. In the case of the polymer electrolyte, since lithium ions are transported by hopping along a molecular chain of the polymer, the lithium ion displacement phenomenon is reduced and lithium dendrites are prevented from growing easily compared to a combination of the liquid electrolyte and the separator, resulting in excellent stability. However, a polymer that does not contain a liquid exhibits a significantly low ionic conductivity of about $10^{-7}$ to $10^{-4}$ S/cm at room temperature. In addition, most polymers are unstable at a high voltage of 4 V or higher and have weak mechanical strength. In order for the polymer electrolyte to be commercialized, the battery should have a large thickness of 50 $\mu$m or more. Therefore, even when the thickness of the battery increases and the polymer electrolyte is formed by a crosslinking process, it is significantly difficult for the mechanical strength of the polymer electrolyte to reach a level comparable to that of a polyolefin-based porous substrate. In addition, it is difficult to apply the polymer electrolyte in practice to batteries for electric vehicles and other applications, where thinning of materials is important for achieving high output and high capacity per unit volume of the batteries. In addition, although it may vary depending on the type of polymer used, a heat shrinkage rate of the polymer electrolyte may be greater than that of a ceramic-coated polyolefin-based porous substrate, and the battery safety may be deteriorated.

[Related Art Document]

[Patent Document]

(Patent Document 1) Korean Patent Laid-Open Publication No. 10-2019-0046237 (Published date: May 7, 2019)

### SUMMARY

An embodiment of the present disclosure is directed to providing a hybrid separator including a lithium ion conductive flexible polymer layer.

Another embodiment of the present disclosure is directed to providing a novel hybrid separator including a lithium ion conductive flexible polymer layer disposed on at least one surface of a porous substrate, and a lithium secondary battery including the same capable of suppressing the growth of lithium dendrites.

Still another embodiment of the present disclosure is directed to providing a novel hybrid separator that overcomes the disadvantages of a separator of the related art and the disadvantages of a polymer electrolyte.

Still another embodiment of the present disclosure is directed to providing a thin separator without increasing the overall thickness thereof while maintaining ionic conductivity and mechanical properties of a polyolefin-based porous substrate itself.

Still another embodiment of the present disclosure is directed to providing a hybrid separator that may significantly suppress the growth of lithium dendrites even during a repeated charging and discharging process.

Still another embodiment of the present disclosure is directed to providing a hybrid separator having an excellent lithium ionic conductivity at 25°C of $10^{-4}$ S/cm or more, $10^{-3}$ S/cm or more, and/or $10^{-2}$ S/cm or less, for example, $10^{-4}$ to $10^{-2}$ S/cm, $10^{-3}$ to $10^{-2}$ S/cm, $4.0 \times 10^{-3}$ to $10^{-2}$ S/cm or $4.0 \times 10^{-3}$ to $7.0 \times 10^{-3}$ S/cm, even when a total thickness of the separator is 50 $\mu$m or less, which is a small thickness, and the separator has a low porosity of 40% or less, and a lithium secondary battery including the same.

Still another embodiment of the present disclosure is directed to providing a hybrid separator having excellent mechanical properties at levels comparable to those of a polyolefin-based porous substrate of the related art with a pin puncture strength of 3 N or more and a tensile strength of 100 MPa or more even when a flexible polymer layer is formed, and a lithium secondary battery including the same.

Still another embodiment of the present disclosure is directed to providing a hybrid separator that may act as a solid electrolyte and may facilitate movement of lithium even when a liquid electrolyte is lost during a repeated charging and discharging process, and a lithium secondary battery including the same.

The hybrid separator and the lithium secondary battery of the present disclosure may be widely applied in an electric vehicle, a battery charging station, and other green technology fields such as solar power generation and wind power generation using batteries. In addition, the hybrid separator and the lithium secondary battery of the present disclosure may be used in an eco-friendly electric vehicle, a hybrid vehicle, and other applications to prevent climate change by suppressing air pollution and greenhouse gas emissions.

In one general aspect, a lithium secondary battery includes a negative electrode; a positive electrode; a separator disposed between the negative electrode and the positive electrode; and a liquid electrolyte,

wherein the separator is a hybrid separator including a porous substrate and a lithium ion conductive flexible polymer layer disposed on at least one surface of the porous substrate, and a lithium ionic conductivity of the hybrid separator is $10^{-4}$ to $10^{-2}$ S/cm at 25 °C.

In one general aspect, a lithium secondary battery includes a negative electrode; a positive electrode; a separator disposed between the negative electrode and the positive electrode and configured to physically separate the positive and negative electrodes while allowing ions to pass through; and a liquid electrolyte disposed between the negative electrode and the positive electrode and configured to carry the ions between the positive and negative electrodes,

wherein the separator is a hybrid separator including a porous substrate and a lithium ion conductive flexible polymer layer disposed on at least one surface of the porous substrate, and lithium ionic conductivity of the hybrid separator is $10^{-4}$ to $10^{-2}$ S/cm at 25 °C.

A porosity of the hybrid separator may be 40% or less, but is not limited thereto.

A heat shrinkage rate at 150°C of the hybrid separator may be 30% or less, but is not limited thereto.

B/A may be 1.0 or less, in which A is a thickness of the porous substrate and B is a thickness of the flexible polymer layer, but is not limited thereto.

A thickness of the flexible polymer layer formed on each surface of the hybrid separator may be 0.1 to 5 pm, but is not limited thereto.

The porous substrate may be a polyolefin-based porous film or a composite film including an inorganic particle layer formed on one surface or both surfaces of the polyolefin-based porous film, but is not limited thereto.

The porous substrate may have a thickness of 4 to 25 $\mu$m and a porosity of 30 to 70%, but is not limited thereto.

The flexible polymer layer may be formed of a lithium ion conductive crosslinked polymer, but is not limited thereto. The "flexible" may be as opposed to being "non-flexible" or "rigid". And the "flexible" behaviour is meant to be in a state of not being disposed on the porous substrate.

The flexible polymer layer may include a crosslinked copolymer containing a unit derived from an acrylic monomer and a unit derived from an ethylene-based unsaturated polyfunctional monomer, but is not limited thereto.

The flexible polymer layer may further include one or two or more additives selected from a lithium salt, a radical additive, and a highly reactive additive.

The ethylene-based unsaturated polyfunctional monomer may be a polyfunctional acrylate-based monomer, but is not limited thereto.

The ethylene-based unsaturated polyfunctional monomer may include one or two or more selected from 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, pentaethylene glycol di(meth)acrylate, polyethylene glycol di(meth)acrylate, dipropylene glycol di(meth)acrylate, tripropylene glycol di(meth)acrylate, dianol di(meth)acrylate, trimethylolpropane tri(meth)acrylate, ditrimethylolpropane tetraacrylate, pentaerythritol triacrylate, pentaerythritol tetraacrylate, and pentaerythritol pentaacrylate, but is not limited thereto.

The hybrid separator may have a pin puncture strength of 3 N or more when measured according to ASTM D3763_02 and a tensile strength of 150 to 200 MPa when measured according to ASTM D882, but is not limited thereto.

The hybrid separator may have an elongation at break at 25°C of 20 to 90% and an elastic recovery rate at a strain of 20% of 50 to 100%, but is not limited thereto.

In another general aspect, a hybrid separator includes a porous substrate; and a lithium ion conductive flexible polymer layer disposed on at least one surface of the porous substrate, wherein a lithium ionic conductivity of the hybrid separator is $10^{-4}$ to $10^{-2}$ S/cm at 25 °C.

The porous substrate may be a polyolefin-based porous film or a composite film including an inorganic particle layer formed on one surface or both surfaces of the polyolefin-based porous film.

The flexible polymer layer may be formed of a lithium ion conductive crosslinked polymer.

The flexible polymer layer may include a crosslinked copolymer containing a unit derived from an acrylic monomer and a unit derived from an ethylene-based unsaturated polyfunctional monomer, but is not limited thereto.

The flexible polymer layer may further include one or two or more additives selected from a lithium salt, a radical additive, and a highly reactive additive.

Other features and aspects will be apparent from the following detailed description, and the claims.

DETAILED **DESCRIPTION** OF **EMBODIMENTS**

Hereinafter, the present disclosure will be described in detail. However, this is only illustrative, and the present disclosure is not limited to specific exemplary embodiments which are illustratively described by the present disclosure.

In addition, unless otherwise defined, all the technical terms and scientific terms have the same meanings as commonly understood by those skilled in the art to which the present disclosure pertains. The terms used in the description of the present disclosure are merely used to effectively describe a specific exemplary embodiment, and are not intended to limit the present disclosure.

In addition, unless the context clearly indicates otherwise, singular forms used in the specification and the scope of the accompanying claims are intended to include plural forms.

In addition, unless explicitly described to the contrary, "comprising" any components will be understood to imply further inclusion of other components rather than the exclusion of any other components.

In addition, unless otherwise specifically defined, when one layer or member is disposed "on" another layer or member, it includes not only a case where one layer or member is brought into contact with another member, but also a case where still another layer or member is present between two layers or two members.

In addition, the terms "about" and "substantially" used in the present disclosure are used in a numerical value or in the vicinity of the numerical value in the meanings mentioned when inherent manufacturing and material allowable errors are presented, and are used to prevent unconscious infringers from illegally using the accurate or absolute numbers disclosed in the present disclosure to help understanding of the present disclosure.

The term "(meth)acryl" used in the present disclosure refers to acryl or methacryl.

As an exemplary embodiment, a negative electrode, a positive electrode, and a liquid electrolyte used in the present disclosure may may include any types of electrodes and electrolytes that can be used in batteries.

Hereinafter, each component of a hybrid separator according to an exemplary embodiment of the present disclosure will be described in more detail.

[Porous substrate]

As an exemplary embodiment, a porous substrate may be used without limitation as long as it is commonly used in the art. More specifically, the porous substrate may be, for example, a polyolefin-based porous film or a composite film including the polyolefin-based porous film and an inorganic particle layer formed on one surface or both surfaces thereof, in which inorganic particles are connected to each other to form pores.

As an exemplary embodiment, the polyolefin-based porous film is a film or sheet commonly used in the art, and may be, for example, a polyolefin-based porous film such as a polyethylene porous film or a polypropylene porous film, but is not limited thereto. Any porous substrate known as a porous substrate of a separator for an electrochemical device may be used.

As an exemplary embodiment, a thickness of the porous substrate may be 1 μm or more, 3 μm or more, 4 μm or more, 5 μm or more, 6 μm or more, 7 μm or more, 8 μm or more, 9 μm or more, 10 μm or more, 100 μm or less, 50 μm or less, 30 μm or less, 20 μm or less, 15 μm or less, or 12 μm or less, and may be any value between the above numerical values. For example, the thickness of the porous substrate may be 1 to 100 pm, 3 to 50 pm, 4 to 25 pm, 5 to 20 pm, 6 to 10 pm, or 9 to 10 $\mu$m. Although not limited, the porous substrate may be produced by stretching.

In addition, a porosity of the porous substrate may be 30% or more, 35% or more, 40% or more, 45% or more, 50% or more, 70% or less, 65% or less, or 60% or less, and may be any value between the above numerical values. For example, the porosity of the porous substrate may be 30 to 70%, 35 to 65%, 40 to 65%, or 45 to 65%.

A composite film as another exemplary embodiment of the porous substrate may be a composite film obtained by forming an inorganic particle layer on the porous film formed of a polyolefin. The inorganic particle layer may be formed by applying and drying a slurry mixture obtained by mixing inorganic particles and a binder so that the inorganic particles are connected to each other to form pores. The inorganic particle layer may include a binder and inorganic particles, and may be a porous inorganic particle layer in which inorganic particles are connected and fixed by the binder to form pores.

In an embodiment, inorganic particles may be added to improve heat resistance of the separator. For example, any types of inorganic particles that can improve heat resistance of the separator may be used. For example, one or a mixture of two or more selected from boehmite, calcium carbonate, talc, clay, kaolin, silica, hydrotalcite, diatomaceous earth, magnesium carbonate, barium carbonate, calcium sulfate, magnesium sulfate, barium sulfate, aluminum hydroxide, magnesium hydroxide, calcium oxide, magnesium oxide, titanium oxide, alumina, mica, zeolite, and glass may be used. In addition, as inorganic particles having a dielectric constant of 5 or more, one or a mixture of two or more selected from $SrTiO_3$, $SnO_2$, $CeO_2$, $MgO$, $NiO$, $CaO$, $ZnO$, $ZrO_2$, $Y_2O_3$, $Al_2O_3$, $TiO_2$, and $SiC$ may be used. In addition, as inorganic particles having piezoelectricity, one or a mixture of two or more selected from $BaTiO_3$, $Pb(Zr,Ti)O_3$ (PZT), $Pb_{1-x}La_xZr_{1-y}TiyO_3$ (PLZT), PB $(Mg_3Nb_{2/3})O_3$-$PbTiO_3$ (PMN-PT), and hafnia $(HfO_2)$ may be used. In addition, as inorganic particles having an ability to transport lithium ions, one or a mixture of two or more selected from lithium phosphate $(Li_3PO_4)$, lithium titanium phosphate $(Li_xTi_y(PO_4)_3, 0 < x < 2, 0 < y < 3)$, lithium aluminum titanium phosphate $(Li_xAl_yTi_z(PO_4)_3, 0 < x < 2, 0 < y < 1, 0 < z < 3)$, $(LiAlTiP)_xO_y$-based glass $(0 < x < 4, 0 < y < 13)$, lithium lanthanum titanate $(Li_xLa_yTiO_3, 0 < x < 2, 0 < y < 3)$, lithium germanium thiophosphate $(Li_xGe_yP_zS_w, 0 < x < 4, 0 < y < 1, 0 < z < 1, 0 < w < 5)$, lithium nitride $(Li_xN_y, 0 < x < 4, 0 < y < 2)$, $SiS_2$-based glass $(Li_xSi_yS_z, 0 < x < 3, 0 < y < 2, 0 < z < 4)$, and $P_2S_5$-based glass $(Li_xP_yS_z, 0 < x < 3, 0 < y < 3, 0 < z < 7)$ may be used. When the inorganic particles having a high dielectric constant, the inorganic particles having piezoelectricity, and the inorganic particles having an ability to transport lithium ions are mixed, the synergistic effect of these inorganic particles may be doubled.

In an embodiment, a average particle diameter of the inorganic particle is not limited, may be 0.001 $\mu$m or more, 0.01 $\mu$m or more, 0.05 $\mu$m or more, 0.1 $\mu$m or more, 0.5 $\mu$m or more, 5 $\mu$m or less, 4 $\mu$m or less, 3 $\mu$m or less, 2 $\mu$m or less, or 1 $\mu$m or less, and may be any value between the above numerical values. For example, the size of the inorganic particle may be 0.001 to 5 pm, 0.01 to 3 pm, 0.1 to 1 pm, or 0.5 to 1 $\mu$m. Within the above range, an inorganic particle layer having a uniform thickness may be formed, and an appropriate porosity may be provided, but the present disclosure is not limited thereto. The average particle diameter refers to $D_{50}$, and $D_{50}$ refers to a particle diameter of a particle corresponding to 50% in terms of a volume-based integrated fraction. The average particle diameter may be derived from particle size distribution results obtained by collecting a sample of particles to be measured in accordance with the standard of ISO 13320-1 and performing analysis using S3500 available from MICROTRAC.

In an exemplary embodiment, a thickness of the inorganic particle layer is not limited, and may be, for example, more than 0 pm, 0.1 $\mu$m or more, 0.2 $\mu$m or more, 0.3 $\mu$m or more, 0.5 $\mu$m or more, 5 $\mu$m or less, 4 $\mu$m or less, 3 $\mu$m or less, 2 $\mu$m or less, 1.5 $\mu$m or less, 1 $\mu$m or less, or a value between the above numerical values. For example, the thickness of the inorganic particle layer may be 0.1 $\mu$m to 5 pm, 0.2 $\mu$m to 5 pm, 0.5 $\mu$m to 5 pm, 1 $\mu$m to 4 pm, or 2 $\mu$m to 4 pm, but is not limited thereto.

In an exemplary embodiment, the inorganic particle layer may be disposed on one surface or both surfaces of the porous film, and an area of the inorganic particle layer may be 60% or more, 70% or more, 80% or more, 90% or more, or 90 to 100% based on the entire surface of the porous film. That is, the inorganic particle layer may be formed over the entire surface of the porous film.

In an exemplary embodiment, the inorganic particle layer may be disposed on one surface or both surfaces of the porous film, and when the inorganic particle layer is disposed on both surfaces of the porous film, a thickness of the inorganic particle layer disposed on one surface and a thickness of the inorganic particle layer disposed on the other surface may be the same as or different from each other.

In an exemplary embodiment, the binder of the inorganic particle layer may be used as long as it may connect and fix the inorganic particles to form a porous inorganic particle layer, and all binders known in the art may be used without limitation. Non-limiting examples of the binder include, but are not limited to, an acrylic resin such as polymethylmethacrylate (PMMA), polybutylacrylate (PBA), or polyacrylonitrile (PAN), a silane-based compound such as (3-aminopropyl) triethoxysilane, (3-aminopropyl)trimethoxysilane, (3-glycidyloxypropyl)trimethoxysilane, or a polymer thereof, styrene butadiene rubber (SBR), carboxyl methyl cellulose (CMC), polyvinylpyrrolidone (PVP), and polyvinylacetate (PVAc).

The inorganic particle layer may be produced by a typical production method of disposing an inorganic particle layer known in the art on a porous film. For example, water may be added to the mixture of the inorganic particles and the binder and stirring may be performed to prepare a slurry for an inorganic particle layer, and then, the prepared slurry for an inorganic particle layer may be applied onto one surface or both surfaces of a porous film by one or a combination of slot die coating, roll coating, spin coating, dip coating, bar coating, die coating, slit coating, and inkjet printing to form an inorganic particle layer on the porous film.

[Flexible polymer layer]

As an exemplary embodiment, as a polymer forming the flexible polymer layer, any polymer may be used without limitation as long as it is a polymer that is flexible and also has lithium conductivity. The "flexible" may be as opposed to being "non-flexible" or "rigid". And the "flexible" behaviour is meant to be in a state of not being disposed on the porous substrate.

As an exemplary embodiment, the flexible polymer layer can be used without limitation as long as it is a lithium-ion conductive polymer, and an elastomeric polymer. Further, the flexible polymer layer may be formed of a lithium ion conductive crosslinked polymer. For example, the flexible polymer layer may include a crosslinked copolymer containing a unit derived from an (meth)acrylic monomer and a unit derived from an ethylene-based unsaturated polyfunctional monomer.

As an exemplary embodiment, the (meth)acrylic (i.e. acrylic or methacrylic) monomer may play a role in dissociating and transporting a lithium salt, thereby improving the ionic conductivity of the flexible polymer layer.

As an exemplary embodiment, examples of the (meth)acrylic monomer include, but are not limited to, one or two or more of (meth)acrylic acid esters including methyl (meth)acrylate, ethyl (meth)acrylate, propyl (meth)acrylate, butyl (meth)acrylate, pentyl (meth)acrylate, allyl (meth)acrylate, 2-methylpropyl (meth)acrylate, 2-ethylhexyl (meth)acrylate, 2-hydroxyethyl (meth)acrylate, hydroxypropyl (meth)acrylate, benzyl (meth)acrylate, hydroxyphenyl (meth)acrylate, and methoxyphenyl (meth) acrylate; or one or two or more of (meth) acrylic acids including methacrylic acid, vinylacetic acid, crotonic acid, isocrotonic acid, pentenoic acid, allylacetic acid, maleic acid, fumaric acid, tiglic acid, angelic acid, citraconic acid, and mesaconic acid.

As an exemplary embodiment, the ethylene-based unsaturated polyfunctional monomer may be a polyfunctional acrylate-based monomer, and the polyfunctional acrylate-based monomer may be more preferred because it may play a role in further improving the ionic conductivity of the flexible polymer layer by performing the role of better lithium salt dissociation and transport.

As an exemplary embodiment, examples of the ethylene-based unsaturated polyfunctional monomer include, but are not limited to, one or two or more selected 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, pentaethylene glycol di(meth)acrylate, polyethylene glycol di(meth)acrylate, dipropylene glycol di(meth)acrylate, tripropylene glycol di(meth)acrylate, dianol di(meth)acrylate, trimethylolpropane tri(meth)acrylate, ditrimethylolpropane tetraacrylate, pentaerythritol triacrylate, pentaerythritol tetraacrylate, and pentaerythritol pentaacrylate.

As an exemplary embodiment, the elasticity of the flexible polymer layer may be further improved by crosslinking the (meth)acrylic monomer and the ethylene-based unsaturated polyfunctional monomer in an appropriate ratio. In the exemplary embodiment, a composition ratio of the ethylene-based unsaturated polyfunctional monomer in the crosslinked copolymer may be 0.1 to 50 mol% with respect to the total content of the monomers, and is not particularly limited as long as a flexible crosslinked polymer is provided. For example, the composition ratio of the ethylene-based unsaturated polyfunctional monomer in the crosslinked copolymer may be 0.1 mol% or more, 0.5% mol% or more, 1 mol% or more, 5 mol% or more, 50 mol% or less, 40 mol% or less, 30 mol% or less, 20 mol% or less, or 10 mol% or less, or may be any value between these values. For example, the composition ratio of the ethylene-based unsaturated polyfunctional monomer in the crosslinked copolymer may be 0.1 to 50 mol%, 1 to 40 mol%, 1 to 30 mol%, 1 to 20 mol%, or 1 to 10 mol%.

As an exemplary embodiment, the flexible polymer layer may include a polymer obtained by reacting the (meth) acrylic monomer and the ethylene-based unsaturated polyfunctional monomer in a weight ratio of 90 to 99:1 to 10, but is not limited thereto. For example, the weight ratio of the (meth)acrylic monomer and the ethylene-based unsaturated polyfunctional monomer may be 90 to 99:1 to 10, 91 to 99:1 to 9, 92 to 99:1 to 8, 93 to 99:1 to 7, 94 to 99:1 to 6, or 95 to 99:1 to 5, but is not limited thereto.

As an exemplary embodiment, the flexible polymer layer may optionally further include the following additives to further improve the elasticity and ionic conductivity of the flexible polymer layer, but is not limited thereto.

The flexible polymer layer may optionally further include a lithium salt as an additive. The lithium salt is dissociated by the functional groups of the (meth)acrylic monomer and the ethylene-based unsaturated polyfunctional monomer, and then, the anion acts as a nucleophile to further increase a crosslinking degree of the crosslinked copolymer, such that the elasticity and other mechanical properties of the flexible polymer layer may be further improved.

As an exemplary embodiment, as the lithium salt, any lithium salt may be used without limitation as long as it is a lithium salt(s) known in the art, and for example, $LiPF_6$, LiTFSI, LiFSI, $LiBF_4$, $LiAsF_6$, LiBOB, LiDFOB, $LiClO_4$, $LiNO_3$, LiBETI, LiCTFSI, and/or $LiB(CN)_4$, may be used.

As an exemplary embodiment, a content of the lithium salt may be 40 wt% or less, 35 wt% or less, 30 wt% or less, 25 wt% or less, 20 wt% or less, 0.1 wt% or more, 0.5 wt% or more, 1 wt% or more, or a value between the above numerical values, with respect to the total weight of the flexible polymer layer. For example, the content of the lithium salt may be 0.1 to 35 wt%, 0.5 to 30 wt%, or 1 to 20 wt%, with respect to the total weight of the flexible polymer layer, but is not limited thereto.

In addition, when forming the flexible polymer layer, a radical additive may be optionally further included as an additive in addition to the monomers described above. The radical additive may assist an initiator so that the crosslinking reaction occurs uniformly even under conditions including factors that inhibit the crosslinking reaction, thereby further improving the elasticity and other mechanical properties of the flexible polymer layer.

Examples of the radical additive include, but are not limited to, one or two or more selected from (2,2,6,6-tetramethylpiperidin-1-yl)oxyl (TEMPO), 4-oxo-2,2,6,6-tetramethyl-1-piperidine-1-oxyl, (oxoTEMPO), and di-t-butylnitroxide (DNTBNO).

As an exemplary embodiment, a content of the radical additive may be 5 wt% or less, 1 wt% or less, 0.5 wt% or less, 0.1 wt% or more, 0.5 wt% or more, 1 wt% or more, or a value between the above numerical values, with respect to the total weight of the flexible polymer layer, and may be, for example, 0.1 to 5 wt%, but is not limited thereto. Alternatively, the content of the radical additive may be used in an amount of 30 to 60 wt% or 40 to 50 wt% with respect to the amount of the initiator added, but is not limited thereto.

In addition, when forming the flexible polymer layer, a highly reactive additive may be optionally further included. The highly reactive additive may increase the hydrogen bonding strength of the crosslinked copolymer, thereby further improving the mechanical properties such as the strength of the flexible polymer layer, and further increasing the crosslinking degree of the crosslinked copolymer.

As an exemplary embodiment, the highly reactive additive may further include one or two or more selected from the group consisting of carboxylic anhydrides, amines, imines, and thiols.

As an exemplary embodiment, examples of the carboxylic anhydrides include, but are not limited to, maleic anhydride and fumaric anhydride. Examples of the amines include, but are not limited to, poly(N-hydroxyethyl acrylamide) (PHEAA) and poly(N-isopropyl acrylamide (PNIPAM). Examples of the imines include, but are not limited to, polyethylenimine (PEI). The thiols may be compounds containing a thiol group at a terminal end, and examples of the thiols include, but are not limited to, 2-ethylhexyl 3-mercaptopropionate and pentaerythritol tetrakis(3-mercaptopropionate).

As an exemplary embodiment, a content of the highly reactive additive may be 5 wt% or less, 4 wt% or less, 3 wt% or less, 2 wt% or less, 0.1 wt% or more, 0.5 wt% or more, 1 wt% or more, or a value between the above numerical values, with respect to the total weight of the flexible polymer layer. For example, the content of the highly reactive additive may be 0.1 to 5 wt%, 0.5 to 4 wt%, or 1 to 3 wt%, with respect to the total weight of the flexible polymer layer, but is not limited thereto.

In order to implement a high-capacity battery, it is advantageous to make the separator thin. By thinning the separator, the capacity per unit volume of the battery may be further increased, and at the same time, the dendrite growth suppression targeted in the present disclosure may be achieved. From the viewpoint of sufficiently improving the elasticity and ionic conductivity of the separator, B/A may be more than 0, 1.0 or less, 0.9 or less, 0.8 or less, 0.7 or less, 0.66 or less, 0.6 or less, 0.5 or less, 0.4 or less, 0.05 or more, 0.1 or more, 0.15 or more, 0.2 or more, 0.22 or more, or any value between the above numerical values, in which A is a thickness of the porous substrate and B is a thickness of the flexible polymer layer. For example, B/A may be 0.1 to 1.0, 0.15 to 0.8, 0.2 to 0.7, 0.2 to 0.6, but is not limited thereto. The thickness B of the flexible polymer layer refers to a thickness of one surface when the flexible polymer layer is formed on one surface of the porous substrate, and refers to the sum of thicknesses of the respective surfaces formed on both surfaces when the flexible polymer layer is formed on both surfaces of the porous substrate.

As an exemplary embodiment, the flexible polymer layer may be formed on one surface or both surfaces of the porous substrate, and in this case, a thickness of the flexible polymer layer formed on each surface may be more than 0 pm, 0.1 $\mu$m or more, 0.5 $\mu$m or more, 1 $\mu$m or more, 2 $\mu$m or more, 3 $\mu$m or more, 5 $\mu$m or less, or 4 $\mu$m or less, or may be any value between the above numerical values. For example, the thickness of the flexible polymer layer formed on each surface may be 0.1 to 5 pm, 0.1 to 4 pm, 0.1 to 3 pm, or 0.1 to 2 $\mu$m.

[Hybrid separator]

The hybrid separator according to an exemplary embodiment of the present disclosure may include the porous substrate and the lithium ion conductive flexible polymer layer disposed on at least one surface of the porous substrate, and a lithium ionic conductivity of the hybrid separator at 25 °C may be $10^{-4}$ S/cm or more, $10^{-3}$ S/cm or more, or $10^{-2}$ S/cm or less, and may be any value between the above numerical values. For example, an excellent hybrid separator having a lithium ionic conductivity of $10^{-4}$ to $10^{-2}$ S/cm, $10^{-3}$ to $10^{-2}$ S/cm, $4.0 \times 10^{-3}$ to $10^{-2}$ S/cm or $4.0 \times 10^{-3}$ to $7.0 \times 10^{-3}$ S/cm and a lithium secondary battery including the same may be provided.

The hybrid separator according to an exemplary embodiment of the present disclosure may have a lithium ionic conductivity satisfying the above range despite including the flexible polymer layer, and the flexible polymer layer is disposed on the outermost layer, such that the formation of lithium dendrites may be suppressed. More specifically, a lithium ionic conductivity at 25°C of the hybrid separator may be calculated by dividing a thickness value of the separator after impregnation with a carbonate liquid electrolyte by a product of an electrical conductivity measured between stainless steel electrodes and an area of the separator.

In addition, since the flexible polymer layer has elasticity, the flexible polymer layer may act as a reinforcing material and has the advantage of improving the mechanical properties of the entire separator. In addition, the flexible polymer layer also has excellent ionic conductivity and may play a role similar to that of a liquid electrolyte. Thus, even when the liquid electrolyte is lost, the flexible polymer layer may act like a solid electrolyte and may facilitate the movement of lithium, thereby extending the life of the battery and providing a stable battery free from ignition. Furthermore, since the flexible polymer layer has lower reactivity with lithium than the liquid electrolyte, the flexible polymer layer may suppress an increase in resistance due to liquid electrolyte depletion and may contribute to improving battery life characteristics. In addition, a change in thickness during a charging and discharging process of the battery may be reduced, such that a change in volume of the battery may be suppressed, thereby improving the stability of the battery.

In a case where the flexible polymer layer is formed on the negative electrode or the positive electrode, even when the electrode and the separator are integrated, a space may occur between the electrode and the separator during an electrode assembly process, and lithium dendrites may be formed in the space. However, the hybrid separator according to an exemplary embodiment of the present disclosure is formed by integrating the flexible polymer layer on the porous substrate, such that the electrode and the separator may be tightly adhered without a space. Alternatively, a portion of the flexible polymer layer may be impregnated into the pores from the surface of the porous substrate for integration. Accordingly, no space occurs during the electrode assembly process, and the formation of lithium dendrites may be further suppressed.

In a first aspect of the hybrid separator according to an exemplary embodiment of the present disclosure, a polyolefin-based porous film and a lithium ion conductive flexible polymer layer formed on one surface of the polyolefin-based porous film may be stacked.

In a second aspect, a polyolefin-based porous film and a lithium ion conductive flexible polymer layer formed on both surfaces of the polyolefin-based porous film may be stacked.

In a third aspect, a lithium ion conductive flexible polymer layer may be stacked on one surface of a composite film. The composite film including an inorganic particle layer formed on one surface of a polyolefin-based porous film. The inorganic particle layer having pores formed by connection of inorganic particles.

In a fourth aspect, a lithium ion conductive flexible polymer layer may be stacked on both surface of a composite film. The composite film including an inorganic particle layer formed on one surface of a polyolefin-based porous film. The inorganic particle layer having pores formed by connection of inorganic particles.

In a fifth aspect, a lithium ion conductive flexible polymer layer may be stacked on one surface of a composite film. The composite film including an inorganic particle layer formed on both surface of a polyolefin-based porous film. The inorganic particle layer having pores formed by connection of inorganic particles.

In a sixth aspect, a lithium ion conductive flexible polymer layer may be stacked on both surface of a composite film. The composite film including an inorganic particle layer formed on both surface of a polyolefin-based porous film. The inorganic particle layer having pores formed by connection of inorganic particles.

The first to sixth aspects describe specific examples of the present disclosure, but are not limited thereto. In addition, another layer may be disposed between the respective layers, but is not limited thereto. In addition, in the third to sixth aspects, the inorganic particle layer and the flexible polymer layer may be formed by stacking two or more layers.

In addition, as an exemplary embodiment, from the viewpoint of ensuring better adhesion between the porous substrate and the flexible polymer layer, when using a composite film that includes the inorganic particle layer, a slurry for forming the inorganic particle layer can be applied onto the porous film, followed by either omitting the drying process or applying a flexible crosslinked polymer coating solution onto a partially dried slurry coating layer (for example, dried with a solvent content of 30% or less) . By manufacturing in this manner, the interfaces of the inorganic particle layer and the flexible polymer layer can mix, thereby forming a more solidified coating layer.

In addition, at least some of the pores of the porous substrate may be impregnated and filled with the flexible polymer layer, and the interfaces are more tightly adhered, such that a dislocation phenomenon during the battery assembly may be prevented, the formation of lithium dendrites during the charging and discharging process may be suppressed, and the ionic conductivity may be further improved.

Alternatively, a slurry for forming an inorganic particle layer may be applied onto a porous film, a drying process may be performed, and then, a flexible crosslinked polymer coating solution may be applied.

As an exemplary embodiment, the total thickness of the hybrid separator may be 50 $\mu$m or less, 40 $\mu$m or less, 30 $\mu$m or less, 25 $\mu$m or less, 20 $\mu$m or less, 15 $\mu$m or less, 3 $\mu$m or more, 5 $\mu$m or more, 10 $\mu$m or more, 11 $\mu$m or more, or a value between the above numerical values. For example, the total thickness of the hybrid separator may be 3 to 50 pm, 5 to 50 pm, 8 to 40 $\mu$m, 10 to 30 pm, or 11 to 15 pm, but is not limited thereto.

As an exemplary embodiment, a porosity of the hybrid separator is not limited, and for example, the porosity of the hybrid separator may be 40% or less, 30% or less, 25% or less, 20% or less, 5% or more, 10% or more, 13% or more, 15% or more, 16% or more, 17% or more, 18% or more, or 19% or more, and may be any value between the above numerical values. For example, the porosity may be 5 to 30%, 10 to 25%, 10 to 20%, 13 to 20%, or 15 to 20%, but is not limited thereto. The flexible polymer layer capable of transporting lithium is adopted even when the porosity is less than 20%, such that a lithium ionic conductivity much superior to that of a separator having the same level of the porosity without adopting the flexible polymer layer may be provided.

In the hybrid separator according to an exemplary embodiment of the present disclosure, as the flexible polymer layer is formed as described above, the porosity of the porous substrate may be reduced compared to its original porosity. However, despite the low porosity, there is an effect that may satisfy the physical property of the lithium ionic conductivity of $10^{-4}$ to $10^{-2}$ S/cm at 25°C.

As an exemplary embodiment, the hybrid separator in which the porous substrate is a composite film including an inorganic particle layer formed on one surface or both surfaces of a polyolefin-based porous film may have a heat shrinkage rate at 150°C of 30% or less, 25% or less, 20% or less, 15% or less, 5% or less, 4% or less, or 3 % or less. A lower limit of the heat shrinkage rate is not limited, may be 0.1% or more or 1% or more, and may be in any range between the above numerical values. For example, the lower limit of the heat shrinkage rate may be 1 to 30%, 1 to 25%, 1 to 20%, 1 to 10%, 1 to 5%, 1 to 3%, 2 to 25%, 2 to 20%, 2 to 10%, 2 to 5%, 2 to 3% or 5 to 25%, but is not limited thereto. The heat shrinkage rate may vary depending on the type of porous substrate, and in the case of the composite film including the inorganic particle layer formed on one surface or both surfaces of the polyolefin-based porous film, the hybrid separator may have a lower heat shrinkage rate compared to the case of the polyolefin-based porous film. For example, when the porous substrate is a polyolefin-based porous film, the hybrid separator may have a heat shrinkage rate of 1 to 30%, 5 to 25%, 10 to 20% or 10 to 15%, and when the porous substrate is a composite film, the hybrid separator may have a heat shrinkage rate of 1 to 5%, 1 to 3%, or 2 to 3%. In a case of a film formed of only a polymer used in the flexible polymer layer of the present disclosure, a heat shrinkage rate may be 50% to 90% or even more, but in the hybrid separator according to an exemplary embodiment of the present disclosure, the porous substrate prevents the heat shrinkage of the flexible polymer layer, and therefore, the final hybrid separator may achieve a physical property of a heat shrinkage rate of 30% or less.

As an exemplary embodiment, the hybrid separator may have a pin puncture strength of 2.5 N or more, 3 N or more, 3.5 N or more, 3.9 N or more, 4.0 N or more, 8 N or less, 7 N or less, 6 N or less, 5 N or less, or 4.5 N or less, when measured according to ASTM D3763_02, and the pin puncture strength of the hybrid separator may be any value between the above numerical values. For example, the pin puncture strength of the hybrid separator may be 2.5 to 8 N, 3 to 8 N, 3.5 to 8 N, 3.9 to 8 N, or 3.9 to 4 N, but is not limited thereto.

In addition, the hybrid separator may have a tensile strength of 80 MPa or more, 100 MPa or more, 130 MPa or more, 150 MPa or more, 180 MPa or more, 185 MPa or more, 220 MPa or less, 200 MPa or less, or 190 MPa or less, when measured according to ASTM D882, and the tensile strength of the hybrid separator may be any value between the above numerical values. For example, the tensile strength of the hybrid separator may be 80 to 220 MPa, 90 to 210 MPa, 100 to 200 MPa, 130 to 185 MPa, or 180 to 185 MPa, but is not limited thereto.

As an exemplary embodiment, the hybrid separator may have an elongation at break at 25°C of more than 0%, 10% or more, 20% or more, 30% or more, 40% or more, 50% or more, 60% or more, 90% or less, 80% or less, 70% or less, or a value between the above numerical values. For example, the elongation at break at 25°C of the hybrid separator may be 20 to 90%, 30 to 80%, 50 to 80%, or 60 to 70%, but is not limited thereto. The elongation at break may be measured according to ASTM D882.

As an exemplary embodiment, an elastic recovery rate at a strain of 20% of the separator on which the flexible polymer layer is disposed may be 50% or more, 60% or more, 70% or more, 80% or more, 90% or more, 100% or less, or a value between the above numerical values, and specifically, may be 50 to 100% or 50 to 80%, but is not limited thereto. The elastic recovery rate may be calculated by dividing a measured value of a length reduced after an external pressure is removed by a difference between the maximum length increased before the external pressure is removed and the original length of the sample.

As an exemplary embodiment, the hybrid separator may satisfy all of the physical property ranges, but is not limited thereto.

[Method of producing hybrid separator]

The production method, conditions, and the like are not limited as long as the hybrid separator according to an exemplary embodiment of the present disclosure may be provided, and will be described by using an example. If there are terms in the contents described below that have already been explained in the above contents, the same explanations may be applied to the terms, and therefore, explanations are omitted for convenience.

As an exemplary embodiment, in a case where a porous substrate is a polyolefin-based porous film, for example, a hybrid separator may be produced by coating one surface or both surfaces of the polyolefin-based porous film with a flexible crosslinked polymer coating solution containing an acrylic monomer, an ethylene-based unsaturated polyfunctional monomer, and an initiator, and performing heat curing or photocuring such as UV curing to form a flexible polymer layer.

As an exemplary embodiment, in a case where a porous substrate is formed by forming an inorganic particle layer on one surface or both surfaces of a polyolefin-based porous film, a hybrid separator may be produced in two aspects.

That is, in the first aspect, a hybrid separator may be produced by applying a slurry for forming an inorganic particle layer onto one surface or both surfaces of a polyolefin-based porous film to produce a composite film and then drying the slurry to form an inorganic particle layer; and coating one surface or both surfaces of the composite film with a flexible crosslinked polymer coating solution containing an acrylic monomer, an ethylene-based unsaturated polyfunctional monomer, and an initiator, and performing heat curing or UV curing to form a flexible polymer layer. In this case, the flexible polymer layer may be formed on the inorganic particle layer of the composite film.

In the second aspect, when producing a composite film including an inorganic particle layer formed on one surface or both surfaces of a polyolefin-based porous film, the composite film may be produced by applying a slurry for forming an inorganic particle layer onto at least one surface of the polyolefin-based porous film, coating an upper surface of the slurry coating layer with a flexible crosslinked polymer coating solution containing an acrylic monomer, an ethylene-based unsaturated polyfunctional monomer, and an initiator before drying the slurry coating layer, drying the flexible crosslinked polymer coating solution, and then performing heat curing or UV curing to form a flexible polymer layer.

In addition, as an exemplary embodiment, the hybrid separator may be produced by further hydrophilizing the surface of the porous substrate by corona discharge treatment and plasma discharge treatment in the atmosphere before applying the flexible crosslinked polymer coating solution and/or the slurry for forming an inorganic particle layer onto the polyolefin-based porous film. As an example of a method for imparting hydrophilicity to the surface of the porous substrate, a hydroxy group, a carboxy group, and/or an aldehyde group may be formed on the surface of the porous substrate through corona discharge or plasma discharge treatment in an oxygen and ozone atmosphere such as the atmosphere, but chemical treatment is not excluded.

As an exemplary embodiment, the flexible crosslinked polymer coating solution may be prepared by any method known in the art, but the method is not limited thereto. However, as a non-limiting example, the flexible crosslinked polymer coating solution may be prepared by mixing an acrylic monomer, an ethylene-based unsaturated polyfunctional monomer, and an initiator without a separate solvent. Alternatively, the flexible crosslinked polymer coating solution may be prepared by adding a solvent.

As the initiator, any thermal polymerization initiator or UV curing initiator commonly used in the art may be used without limitation. Examples of the thermal polymerization initiator include, but are not limited to, an azo-based compound, an organic peroxide, and hydrogen peroxide.

As an exemplary embodiment, when the acrylic monomer and the ethylene-based unsaturated polyfunctional monomer are contained in the flexible crosslinked polymer coating solution in an appropriate ratio and crosslinking is performed, the elasticity of the flexible polymer layer to be produced may be further improved. In the exemplary embodiment, a molar ratio of the acrylic monomer to the ethylene-based unsaturated polyfunctional monomer in the flexible crosslinked polymer coating solution may be, for example, 2 or more, 5 or more, 10 or more, 20 or more, 30 or more, 50 or more, 200 or less, 150 or less, 120 or less, 100 or less, or a value between the above numerical values. Specifically, the molar ratio may be 2 to 200, 5 to 150, 10 to 120, 20 to 100, 30 to 100, 50 to 100, 60 to 100, 70 to 100, 80 to 100, or 90 to 100, but is not limited thereto.

For example, the flexible crosslinked polymer coating solution may contain a monomer mixture obtained by mixing the acrylic monomer and the ethylene-based unsaturated polyfunctional monomer in a weight ratio of 90 to 99:1 to 10, and an initiator, and a content of the initiator may be 0.1 to 5 wt%, but is not limited thereto.

In order to provide a flexible polymer layer having further improved elasticity and ionic conductivity, according to a specific exemplary embodiment, the flexible crosslinked polymer coating solution may optionally further contain the following additives, but is not limited thereto. The same explanation as above may be applied to the reasons for adding the additives and the types of additives, and therefore, the explanation is omitted for convenience.

As an exemplary embodiment, the flexible crosslinked polymer coating solution may optionally further contain a lithium salt, and a content of the lithium salt may be 30 wt% or less, 25 wt% or less, 20 wt% or less, 0.1 wt% or more, 0.5 wt% or more, 1 wt% or more, or a value between the above numerical values, and specifically, 0.1 to 30 wt%, 0.5 to 25 wt%, or 1 to 20 wt%, with respect to the total weight of the solid content of the flexible crosslinked polymer coating solution, but is not limited thereto.

As an exemplary embodiment, the flexible crosslinked polymer coating solution may optionally further contain a radical additive, and may further contain, for example, one or two or more selected from the radical additive group consisting of (2,2,6,6-tetramethylpiperidin-1-yl)oxyl (TEMPO), 4-oxo-2,2,6,6-tetramethyl-1-piperidine-1-oxyl, (oxoTEMPO), and di-t-butylnitroxide (DNTBNO).

As an exemplary embodiment, a content of the radical additive may be 30 wt% or less, 25 wt% or less, 20 wt% or less, 0.1 wt% or more, 0.5 wt% or more, 1 wt% or more, or a value between the above numerical values, and specifically, 0.1 to 30 wt%, 0.5 to 25 wt%, or 1 to 20 wt%, with respect to the total weight of the solid content of the flexible crosslinked polymer coating solution, but is not limited thereto.

As an exemplary embodiment, the flexible crosslinked polymer coating solution may optionally further contain a highly reactive additive, more specifically, may further contain one or two or more selected from the group consisting of carboxylic anhydrides, amines, imines, and thiols.

As an exemplary embodiment, a content of the highly reactive additive may be 30 wt% or less, 25 wt% or less, 20 wt% or less, 0.1 wt% or more, 0.5 wt% or more, 1 wt% or more, or a value between the above numerical values, with respect to the total weight of the solid content of the flexible crosslinked polymer coating solution. For example, the content of the highly reactive additive may be 0.1 to 30 wt%, 0.5 to 25 wt%, 1 to 20 wt%, 1 to 10 wt%, or 1 to 5 wt%, but is not limited thereto.

As an exemplary embodiment, the slurry for forming an inorganic particle layer may be applied by using any method known in the art, and may be used without limitation.

As an exemplary embodiment, as a non-limiting example of the coating process, one or a combination of slot die coating, roll coating, spin coating, dip coating, bar coating, die coating, slit coating, and inkjet printing may be used.

As an exemplary embodiment, a process of forming the flexible polymer layer may be performed by applying a composition and then heating the composition to perform a drying and crosslinking reaction. As a specific exemplary embodiment to perform the drying and crosslinking reaction more smoothly, a heating temperature may be 40°C or higher, 50°C or higher, 60°C or higher, 65°C or higher, 150°C or lower, 120°C or lower, 100°C or lower, 90°C or lower, 80°C or lower, or a value between the above numerical values. For example, the heating temperature may be 40 to 150°C, 50 to 120°C, 60 to 100°C, 60 to 90°C, or 65 to 80°C, but is not limited thereto.

As an exemplary embodiment, a heating time to perform the drying and crosslinking reaction more smoothly may be 1 minute or longer, 5 minutes or longer, 10 minutes or longer, 20 minutes or longer, 30 minutes or longer, 3 hours or shorter, 2 hours or shorter, 1 hour or shorter, or a value between the above numerical values. For example, the heating time may be 1 minute to 3 hours, 5 minutes to 3 hours, 30 minutes to 3 hours, 20 minutes to 2 hours, or 30 minutes to 1 hour, but is not limited thereto.

As an exemplary embodiment, a heating atmosphere is not limited, and may be, for example, an air atmosphere, and preferably, an atmosphere free of moisture and oxygen.

As an exemplary embodiment, a method for providing the inorganic particle layer on the porous film is not limited and is sufficient as long as it is a typical production method. As a non-limiting example, water may be added to a mixture of inorganic particles and a binder and stirred to prepare a slurry for an inorganic particle layer, or a slurry may be prepared by mixing inorganic particles and water without a binder. The prepared slurry for an inorganic particle layer may be applied onto one surface or both surfaces of a porous film by one or a combination of slot die coating, roll coating, spin coating, dip coating, bar coating, die coating, slit coating, and inkjet printing to form an inorganic particle layer on at least one surface of the porous film.

As an exemplary embodiment, a lithium battery including the separator of an exemplary embodiment may be provided, the lithium battery may refer to any electrochemical device containing lithium, and the type thereof is not particularly limited. Non-limiting examples of the lithium battery include a lithium secondary battery. Since the lithium secondary battery is well known and a configuration thereof is also known, the lithium secondary battery is not described in detail in the present disclosure.

As an exemplary embodiment, the lithium battery may include a positive electrode; a negative electrode; and the hybrid separator of the present exemplary embodiment interposed between the positive electrode and the negative electrode. In this case, any positive electrode and negative electrode may be used without limitation as long as they are generally used in a lithium secondary battery.

Hereinafter, examples of the present disclosure will be further described with reference to specific experimental examples. The examples and comparative examples included in the experimental examples are merely illustrative of the present disclosure and do not limit the scope of the of the accompanying claims, and it is obvious to those skilled in the art that various modifications and alterations may be made without departing from the scope of the present disclosure, and it is obvious that these modifications and alterations are within the accompanying claims.

Physical properties were measured as follows.

<Ionic conductivity>

An ionic conductivity of a hybrid separator of each of examples and comparative examples was calculated by the following equation.

$$\text{Ionic conductivity} = L/(R \times A)$$

L = Thickness of hybrid separator impregnated with liquid electrolyte (unit: cm)
R = Impedance value of hybrid separator impregnated with liquid electrolyte at 25 °C (unit: $\Omega$ = 1/S) (real value when imaginary value of impedance is 0)
A = Overlapping area between two electrodes when measuring impedance ($cm^2$)

In order to determine the R value, the hybrid separator was punched to have a concentric circle having a diameter of 18 mm and then impregnated for 1 hour with a carbonate liquid electrolyte (1 M $LiPF_6$ in EC/EMC/DEC 3:5:2 (v/v/v)). At this time, the L value was measured with a micrometer available from Mitutoyo Corporation, and the A value was determined to be 2.5447 $cm^2$. Thereafter, a 2032 coin cell (SUS material) was assembled with the separator impregnated with the liquid electrolyte, and a constant-voltage impedance was measured under conditions of an initial voltage of 0 V and an amplitude of 5 mV in a range of 100 MHz to 100 mHz using IM6 equipment available from Zahner Company. The real impedance value R when the imaginary value was 0 was determined by fitting the measured impedance equivalent circuit.

<Porosity>

A sample was cut into a rectangle of A cm × B cm and a porosity of the separator was calculated by the following equation. The sample was cut into a rectangle ranging from 5 to 20 cm for both A and B.

$$Porosity = \{(A \times B \times T) - (M/\rho)/(A \times B \times T)\} \times 100$$

T = Separator thickness (cm)
M = Sample weight (g)
$\rho$ = True density of entire separator (g/$cm^3$)

<Heat shrinkage rate>

The separator was cut into a square shape with a side of 10 cm to prepare a sample, and an area of the sample before the experiment was measured and recorded using a camera. Five sheets of paper were placed on the upper and lower portions of the sample so that the sample was centered, and four sides of the paper were fixed with clips. The sample wrapped with the paper was left in a hot air circulation dryer at 150°C for 1 hour. After the sample was left, the sample was taken out, each of length changes in MD and TD of the separator was measured using a camera, and then, a shrinkage rate was calculated by the following equation. The values in the MD and TD directions were taken and averaged.

Shrinkage rate (%) = (Length of one side of sample before heating ($L_0$) - length of one side of deformed sample after heating (L))/length of one side of sample before heating ($L_0$) × 100

<Pin puncture strength>

A pin puncture strength of the separator was measured according to ASTM D3763_02.

<Tensile strength and elongation at break>

A tensile strength and an elongation at break of the separator were measured at 25 °C according to ASTM D882. The values in the MD and TD directions were taken and averaged.

<Elastic recovery rate>

An elastic recovery rate value of the separator was calculated as a rate of change in integral area of a curve obtained after performing a tensile test using a universal testing machine.

$$Elastic\ recovery\ rate\ (\%) = (X)/(Y) \times 100$$

X = Integral area of stress-strain curve obtained when applying tensile force to sample
Y = Integral area of stress-strain curve obtained when removing tensile force

In order to determine the X value and the Y value, a sample with a size of 60 mm × 10 mm (length × width, respectively) was prepared. The sample was clamped so that a distance $L_0$ between clamps of the universal testing machine was 40 mm, the sample was stretched at a speed of 100 mm/min so that a final length L was 48 mm to obtain a stress-strain curve for determining the X value, and then, an external force was removed so that the sample immediately returned to its original length to obtain a stress-strain curve for determining the Y value. The elastic recovery rate value was calculated from the obtained X and Y values.

<Thickness>

A thickness of the separator was measured using a contact type thickness gauge with thickness accuracy of 0.1 μm.

<Gurley permeability>

A Gurley permeability of the porous film was measured using a densometer available from Toyo Seiki Seisaku-sho, Ltd. according to ASTM D726 standard. The times taken for 100 cc of air to pass through an area of 1 square inch of the porous film were recorded in seconds and compared with each other.

<Presence or absence of lithium dendrites in battery>

A single-plate battery was assembled by disposing the separator produced in each of the examples and comparative examples between the $Li(Ni_{0.8}Co_{0.1}Mn_{0.1})O_2$ positive electrode and the graphite negative electrode. The battery was injected with a liquid electrolyte in which 1.15 M $LiPF_6$ was dissolved in a mixed solvent of ethylene carbonate (EC)/ethyl methyl carbonate(EMC)/diethyl carbonate(DEC) (3:5:2, v/v/v) together with 5 wt% of fluoroethylene carbonate (FEC). The battery was subjected to 100 cycles of CC/CV mode charging and CC mode discharging at a current density of 0.5 C in a voltage range of 3.0 V to 4.2 V, and then disassembled in a charged state to check for the occurrence and growth of lithium dendrites. After the negative electrode was recovered from the disassembled battery in an environment free of oxygen and moisture, the residual lithium salt was washed with an EC/EMC/DEC mixed solvent and then dried. The dried negative electrode surface was observed visually and observed using an SEM to confirm the presence or absence of lithium dendrites in the battery.

< molecular weight>

A weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material.

[Preparation Example 1] Preparation of aqueous slurry for inorganic particle layer

To 100 parts by weight of distilled water, 1.0 part by weight of a carboxylic acid polymer-based inorganic dispersant (BASF SE, Dispex® AA 4030) was added, and then 100 parts by weight of boehmite (γ-A10(OH)) having an average particle size of 500 nm was added and stirred, and dispersed using a bead mill, thereby preparing a uniform aqueous slurry base solution. A 10% aqueous solution of acrylic polymer (Sigma-Aldrich, CAS No.: 9003-05-8, $M_n$: 150,000) was added to the prepared base solution in an amount of 50 parts by weight with respect to the amount of boehmite added, and 40 parts by weight of distilled water was additionally added to dilute the solution to obtain a viscosity appropriate for a target coating thickness, and then, stirring was performed. Before coating, a wetting additive (BASF SE, TEXAPON® SB 3 UNKONS) was added in an amount of 1,000 ppm with respect to the total solution weight and further stirred for 1 hour to prepare an aqueous slurry for an inorganic particle layer.

[Preparation Example 2] Preparation of flexible crosslinked polymer coating solution (1)

A flexible crosslinked polymer coating solution was prepared by mixing 95 wt% of butyl methacrylate, 4 wt% of poly(ethylene glycol) dimethacrylate having a number average molecular weight (Mn) of 550 g/mol, and 1 wt% of an initiator (2-hydroxy-2-methylpropiophenone). The prepared solution was stored in a refrigerated environment at 5°C or lower and was consumed within 2 hours of preparation through coating and a crosslinking reaction.

[Preparation Example 3] Preparation of flexible crosslinked polymer coating solution (2)

A base solution of a flexible crosslinked polymer coating solution was prepared by mixing 95 wt% of butyl methacrylate, 4 wt% of poly(ethylene glycol) dimethacrylate having Mn of 550 g/mol, and 1 wt% of an initiator (2-hydroxy-2-methylpropiophenone). Thereafter, a flexible crosslinked polymer coating solution was prepared by mixing a lithium salt obtained by mixing lithium bis(fluorosulfonyl)imide and lithium difluoro(oxalato)borate in a weight ratio of 8:2 in an amount of 20 wt% (20 mol% with respect to the amount of butyl methacrylate added) with respect to the total weight of the polymer. The prepared solution was stored in a refrigerated environment at 5°C or lower and was consumed within 2 hours of preparation through coating and a crosslinking reaction.

[Preparation Example 4] Preparation of flexible crosslinked polymer coating solution (3)

A base solution of a flexible crosslinked polymer coating solution was prepared by mixing 95 wt% of butyl methacrylate, 4 wt% of poly(ethylene glycol) dimethacrylate having Mn of 550 g/mol, and 1 wt% of an initiator (2-hydroxy-2-methylpropiophenone). Thereafter, a flexible crosslinked polymer coating solution was prepared by mixing (2,2,6,6-tetramethylpiperidin-1-yl)oxyl as a radical additive in an amount of 50 wt% with respect to the amount of initiator added. The prepared solution was stored in a refrigerated environment at 5°C or lower and was consumed within 2 hours of preparation through coating and a crosslinking reaction.

[Preparation Example 5] Preparation of flexible crosslinked polymer coating solution (4)

A base solution of a flexible crosslinked polymer coating solution was prepared by mixing 95 wt% of butyl methacrylate, 4 wt% of poly(ethylene glycol) dimethacrylate having Mn of 550 g/mol, and 1 wt% of an initiator (2-hydroxy-2-methylpropiophenone). Thereafter, a flexible crosslinked polymer coating solution was prepared by mixing maleic anhydride as a highly reactive additive in an amount of 3 wt% with respect to the crosslinked polymer coating solution base. The prepared solution was stored in a refrigerated environment at 5°C or lower and was consumed within 2 hours of preparation through coating and a crosslinking reaction.

[Example 1] Production of hybrid separator (1)

As a porous substrate, a polyethylene porous film having a thickness of 9 pm, a porosity of 45%, and a Gurley permeability of 70 sec/100 cc was used.
The flexible crosslinked polymer coating solution prepared in Preparation Example 2 was applied onto both surfaces of the porous substrate using a bar coating method, dried with hot air, and then exposed to light from a metal halide lamp in a UV crosslinking device in which an oxygen concentration was controlled to 500 ppm or less by nitrogen purge, thereby forming a flexible polymer layer. A thickness of each of the flexible polymer layers formed on the both surfaces was 1 $\mu$m.
The total thickness of the produced hybrid separator was 11 $\mu$m, and the physical properties were evaluated and shown in Table 1.

[Example 2] Production of hybrid separator (2)

As a porous substrate, a polyethylene porous film having a thickness of 9 pm, a porosity of 45%, and a Gurley permeability of 70 sec/100 cc was used.
For coating of an inorganic particle layer, both surfaces of the porous film were subjected to corona discharge treatment to introduce surface polarity groups. At this time, the corona surface treatment was performed at a speed of 5 mpm (meter per minute).
The both surfaces of the porous substrate were coated with the aqueous slurry prepared in Preparation Example 1, and then, drying was performed, thereby forming an inorganic particle layer. A thickness of each of the inorganic particle layers formed on the both surfaces after drying was 2 $\mu$m.
The flexible crosslinked polymer coating solution prepared in Preparation Example 2 was applied onto upper portions of the inorganic particle layers formed on the both surfaces, dried with hot air, and then exposed to light from a metal halide lamp in a UV crosslinking device in which an oxygen concentration was controlled to 500 ppm or less by nitrogen purge, thereby forming a flexible polymer layer. A thickness of each of the flexible polymer layers formed on the both surfaces was 1 $\mu$m.
The total thickness of the produced hybrid separator was 15 $\mu$m, and the physical properties were evaluated and shown in Table 1.

[Example 3] Production of hybrid separator (3)

A hybrid separator was produced in the same manner as that of Example 1, except that the thickness of each of the flexible polymer layers was 3 $\mu$m. The total thickness of the produced hybrid separator was 15 $\mu$m, and the physical properties were evaluated and shown in Table 1.

[Example 4] Production of hybrid separator (4)

As a porous substrate, a polyethylene porous film having a thickness of 9 pm, a porosity of 45%, and a Gurley permeability of 70 sec/100 cc was used.

The flexible crosslinked polymer coating solution prepared in Preparation Example 3 was applied onto both surfaces of the porous substrate, dried with hot air, and then exposed to light from a metal halide lamp in a UV crosslinking device in which an oxygen concentration was controlled to 500 ppm or less by nitrogen purge, thereby forming a flexible polymer layer. A thickness of each of the flexible polymer layers formed on the both surfaces was 1 pm.

The total thickness of the produced hybrid separator was 11 $\mu$m, and the physical properties were evaluated and shown in Table 1.

[Example 5] Production of hybrid separator (5)

As a porous substrate, a polyethylene porous film having a thickness of 9 $\mu$m, a porosity of 45%, and a Gurley permeability of 70 sec/100 cc was used.

The flexible crosslinked polymer coating solution prepared in Preparation Example 4 was applied onto both surfaces of the porous substrate, dried with hot air, and then exposed to light from a metal halide lamp in a UV crosslinking device in which an oxygen concentration was controlled to 500 ppm or less by nitrogen purge, thereby forming a flexible polymer layer. A thickness of each of the flexible polymer layers formed on the both surfaces was 1 pm.

The total thickness of the produced hybrid separator was 11 $\mu$m, and the physical properties were evaluated and shown in Table 1.

[Example 6] Production of hybrid separator (6)

As a porous substrate, a polyethylene porous film having a thickness of 9 $\mu$m, a porosity of 45%, and a Gurley permeability of 70 sec/100 cc was used.

The flexible crosslinked polymer coating solution prepared in Preparation Example 5 was applied onto both surfaces of the porous substrate, dried with hot air, and then exposed to light from a metal halide lamp in a UV crosslinking device in which an oxygen concentration was controlled to 500 ppm or less by nitrogen purge, thereby forming a flexible polymer layer. A thickness of each of the flexible polymer layers formed on the both surfaces was 1 pm.

The total thickness of the produced hybrid separator was 11 $\mu$m, and the physical properties were evaluated and shown in Table 1.

[Comparative Example 1]

The flexible crosslinked polymer coating solution of Preparation Example 2 was applied and cured on one Teflon sheet to produce a flexible polymer sheet having a thickness of 19 pm.

The physical properties of the produced flexible polymer sheet were evaluated and shown in Table 1.

[Comparative Example 2]

A separator was produced in the same manner as that of Example 2, except that a flexible polymer layer was not formed.

As a porous substrate, a polyethylene porous film having a thickness of 9 $\mu$m, a porosity of 45%, and a Gurley permeability of 70 sec/100 cc was used.

For coating of an inorganic particle layer, both surfaces of the porous film were subjected to corona discharge treatment to introduce surface polarity groups. At this time, the corona surface treatment was performed at a speed of 5 mpm (meter per minute).

The both surfaces of the porous substrate were coated with the aqueous slurry prepared in Preparation Example 1, and then, drying was performed, thereby forming an inorganic particle layer. A thickness of each of the inorganic particle layers formed on the both surfaces after drying was 2 pm.

The total thickness of the produced separator was 13 $\mu$m, and the physical properties were evaluated and shown in Table 1.

[Comparative Example 3]

A separator was produced in the same manner as that of Example 1, except that a coating thickness on one surface was set to 5 $\mu$m by repeatedly coating the flexible polymer layer. The results thereof were shown in Table 1.

[Table 1]

| | Example 1 | Example 2 | Example 3 | Example 4 | Example 5 | Example 6 | Comparative Example 1 | Comparative Example 2 | Comparative Examples |
|---|---|---|---|---|---|---|---|---|---|
| Total thickness (μm) | 11 | 15 | 15 | 11 | 11 | 11 | - | 13 | 19 |
| Thickness (μm) of porous substrate (A) | 9 | 9 | 9 | 9 | 9 | 9 | - | 9 | 9 |
| Total thickness (μm) of inorganic particle layer | - | 4 | - | - | - | - | - | 4 | - |
| Total thickness (μm) of flexible polymer layer (B) | 2 | 2 | 6 | 2 | 2 | 2 | 19 | - | 10 |
| B/A | 0.22 | 0.15 | 0.66 | 0.22 | 0.22 | 0.22 | - | - | 1.11 |
| Lithium ionic conductivity (S/cm) | $0.35 \times 10^{-3}$ | $0.45 \times 10^{-3}$ | $0.30 \times 10^{-3}$ | $0.65 \times 10^{-3}$ | $0.40 \times 10^{-3}$ | $0.40 \times 10^{-3}$ | $0.10 \times 10^{-3}$ | $0.47 \times 10^{-3}$ | $0.12 \times 10^{-3}$ |
| Pin puncture strength (N) | 4.0 N | 3.9 N | 4.0 N | 4.0 N | 4.0 N | 4.0 N | 0.5 N | 3.9 N | 4.0 N |
| Tensile strength (MPa) | 180 | 130 | 130 | 180 | 185 | 185 | 1 | 150 | 100 |
| Elongation at break at 25°C (%) | 60 | 60 | 70 | 70 | 70 | 70 | 500 | 60 | 80 |
| Elastic recovery rate at strain of 20% (%) | 50 | 50 | 80 | 50 | 60 | 60 | 99 | 30 | 85 |
| Porosity (%) | 15 | 20 | 13 | 15 | 15 | 15 | 1 | 45 | 8 |
| Heat shrinkage rate at 150°C (%) | 20 | 5 | 25 | 20 | 20 | 20 | 60 | 5 | 30 |
| Presence or absence of lithium dendrites in battery | Absence | Absence | Absence | Absence | Absence | Absence | Absence | Presence | Absence |

As shown in Table 1, in the examples, it was confirmed that, although the porosity, which is a volume ratio of pores serving as the passages for moving lithium ions, was 20% or less in the entire separator, the lithium ionic conductivity was excellent at almost the same level as that in Comparative Example 2 in which a flexible polymer layer was not provided and the porosity was 45%, which was high.

At the same time, it was confirmed that the elastic recovery rate for suppressing the growth of lithium dendrites in the battery increased to 50% or more, and the pin puncture strength and tensile strength were maintained at similar or high levels, showing excellent mechanical properties.

In addition, it was confirmed that the heat shrinkage rate was even lower in the case in which an inorganic particle layer was further included as in Example 2 and Comparative Example 2 than the other Examples and Comparative Examples.

In addition, in the case in which the hybrid separator was composed of a flexible polymer sheet alone without a polyolefin-based porous film as in Comparative Example 1, it was confirmed that the heat shrinkage rate was high, the ionic conductivity was low, and the mechanical properties were poor.

Comparative Example 2 is a case in which an inorganic particle layer is formed on both surfaces of a polyolefin-based porous film, which is a type of separator commonly used in the related art. However, in the examples of the present disclosure, it was confirmed that, although the porosities in Examples 1 to 6 were lower than that in Comparative Example 2, there was no difference therebetween in lithium ionic conductivity, the conductivity was at the same level as in Comparative Example 2, and at the same time, the physical properties of Examples 1 to 6 at an elastic recovery rate were significantly improved rather than that in Comparative Example 2.

In addition, as seen in Comparative Example 3, it was confirmed that, when B/A was more than 1.0, the porosity and the lithium ionic conductivity were significantly reduced.

That is, in Examples 1 to 6 according to an exemplary embodiment of the present disclosure, it was confirmed that, although the porosity was 20% or less, which was lower than the original porosity of 45% of the polyolefin-based porous film, the ionic conductivity was at the same level as that of the separator according to the related art in which a flexible polymer layer was not formed, as in Comparative Example 2. In addition, it was confirmed that the mechanical strength such as the pin puncture and the elongation adopted the same level and the elastic recovery rate was excellent rather than Comparative Example 2. In addition, as a result of confirming the presence or absence of lithium dendrites after assembling the battery and repeating charging and discharging 100 times, it was confirmed that the occurrence of lithium dendrites in Example 1 to 6 was significantly reduced compared to Comparative Example 2.

In addition, as seen in Example 2, it was confirmed that, when an inorganic particle layer was formed on a porous substrate, the physical property of a heat shrinkage rate at 150°C of 5% or less was satisfied.

As set forth above, according to an exemplary embodiment of the present disclosure, it is possible to provide an effect of suppressing the growth of lithium ion dendrites during the repeated charging and discharging process while maintaining the ionic conductivity and mechanical strength of the polyolefin-based porous substrate as they are.

In addition, even when the amount of liquid electrolyte is lost due to the loss of organic solvent in the electrolyte during the repeated charging and discharging process and long-term storage of the battery, the flexible polymer layer has desirable lithium ionic conductivity, and therefore, lithium moves smoothly and the battery performance may be maintained for a long time. Accordingly, the advantage of little changes in electrical characteristics of the battery even after long-term use may be provided.

In addition, a flexible polymer layer having both improved lithium ionic conductivity and high flexibility is formed into a thin film, such that a lithium secondary battery with high-capacity per unit volume may be provided. That is, since more battery cells may be stacked within the same volume to increase the capacity of the battery, a high-capacity lithium secondary battery may be provided. The battery cell refers to a combination of a positive electrode, a negative electrode, and a separator disposed between the positive electrode and the negative electrode.

In addition, the flexible polymer layer according to an exemplary embodiment of the present disclosure has excellent elasticity and thus acts as a reinforcing material for the separator, such that the mechanical properties of the entire separator may be improved. In addition, the growth of lithium dendrites may be suppressed, and even when lithium dendrites grow, puncturing the separator by dendrites puncture may be avoided, and the flexible polymer layer may be partly restored to its original state by elasticity, such that damage in the polyolefin-based porous film may be minimized. Accordingly, the life of the battery may be further improved, and a battery with a lower risk of explosion may be provided.

In addition, the heat shrinkage of the separator may be minimized, and the change in thickness during the charging and discharging process of the battery may be reduced, such that a change in volume of the battery may be suppressed, thereby improving the stability of the battery.

In addition, the flexible polymer layer includes a lithium ion conductive crosslinked copolymer, and thus has excellent lithium ionic conductivity and may perform a role similar to that of a liquid electrolyte. Further, the flexible polymer layer has low reactivity with lithium compared to a liquid electrolyte, and thus may suppress an increase in resistance due to depletion of the liquid electrolyte and may contribute to improving the battery life characteristics.

The content described above is merely an example of applying the principles of the present disclosure, and other configurations may be further included without departing from the scope of the present disclosure.

Hereinabove, although the present disclosure has been described by specific matters and limited exemplary embodiments, they have been provided only for assisting in the entire understanding of the present disclosure. Therefore, the present disclosure is not limited to the exemplary embodiments. Various modifications and changes may be made by those skilled in the art to which the present disclosure pertains from this description.

Therefore, the present disclosure should not be limited to the described exemplary embodiments, but the claims and all modifications equal or equivalent to the claims are intended to fall within the present disclosure.

**Claims**

1. A hybrid separator comprising:

   a porous substrate; and
   a lithium ion conductive flexible polymer layer disposed on at least one surface of the porous substrate, and
   a lithium ionic conductivity of the hybrid separator is $10^{-4}$ to $10^{-2}$ S/cm.

2. The hybrid separator of claim 1, wherein a porosity of the hybrid separator is 40% or less.

3. The hybrid separator of claim 1 or 2, wherein a heat shrinkage rate at 150°C of the hybrid separator is 30% or less.

4. The hybrid separator of any one of the preceding claims, wherein B/A is 1.0 or less, in which A is a thickness of the porous substrate and B is a thickness of the flexible polymer layer.

5. The hybrid separator of any one of the preceding claims, wherein a thickness of the flexible polymer layer formed on each surface of the hybrid separator is 0.1 to 5 pm.

6. The hybrid separator of any one of the preceding claims, wherein the porous substrate is selected from a polyolefin-based porous film or a composite film including an inorganic particle layer formed on one surface or both surfaces of the polyolefin-based porous film.

7. The hybrid separator of any one of the preceding claims, wherein the porous substrate has a thickness of 4 to 25 $\mu$m and a porosity of 30 to 70%.

8. The hybrid separator of one of the preceding claims, wherein the flexible polymer layer is formed of a lithium ion conductive crosslinked polymer.

9. The hybrid separator of claim 8, wherein the flexible polymer layer includes a crosslinked copolymer containing a unit derived from an acrylic monomer and a unit derived from an ethylene-based unsaturated polyfunctional monomer.

10. The hybrid separator of claim 9, wherein the ethylene-based unsaturated polyfunctional monomer is a polyfunctional acrylate-based monomer.

11. The lithium secondary battery of claim 9 or 10, wherein the ethylene-based unsaturated polyfunctional monomer includes one or two or more selected from the group consisting of 1,4-butanediol di(meth)acrylate, 1,6-hexanediol di(meth)acrylate, diethylene glycol di(meth)acrylate, triethylene glycol di(meth)acrylate, tetraethylene glycol di(meth)acrylate, pentaethylene glycol di(meth)acrylate, polyethylene glycol di(meth)acrylate, dipropylene glycol di(meth)acrylate, tripropylene glycol di(meth)acrylate, dianol di(meth)acrylate, trimethylolpropane tri(meth)acrylate, ditrimethylolpropane tetraacrylate, pentaerythritol triacrylate, pentaerythritol tetraacrylate, and pentaerythritol pentaacrylate.

12. The hybrid separator of one of the preceding claims, wherein the flexible polymer layer further includes one or two or more additives selected from a lithium salt, a radical additive, and a highly reactive additive

13. The hybrid separator of one of the preceding claims, wherein the hybrid separator has a pin puncture strength of 3 N or more when measured according to ASTM D3763_02, and/or a tensile strength of 150 to 200 MPa when measured according to ASTM D882.

14. The hybrid separator of one of the preceding claims, wherein the hybrid separator has an elongation at break at 25°C of 20 to 90%, and/or an elastic recovery rate at a strain of 20% of 50 to 100%.

15. A lithium secondary battery comprising:

   a negative electrode;
   a positive electrode; and
   the hybrid separator according to one of the preceding claims, disposed between the negative electrode and the positive electrode; and
   a liquid electrolyte.

Europäisches
Patentamt

European
Patent Office

Office européen
des brevets

# EUROPEAN SEARCH REPORT

**Application Number**

EP 24 21 1493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/333309 A1 (LAI XULUN [CN] ET AL) 19 November 2015 (2015-11-19) * paragraphs [0002], [0044] - [0162]; claim 10; examples 1-24; tables 1,2 * | 1-7,12, 14,15 | INV. H01M10/0525 H01M50/40 H01M50/42 H01M50/449 |
| X | CN 108 242 522 B (BYD CO LTD) 3 September 2021 (2021-09-03) * paragraphs [0001], [0087] - [0096]; claim 18; example 1 * | 1,3-7, 12-15 | H01M50/491 H01M50/494 H01M50/497 H01M50/417 |
| X | US 2022/367910 A1 (ZHOU GUODONG [CN] ET AL) 17 November 2022 (2022-11-17) * paragraphs [0037], [0046], [0047], [0050]; claims 1, 6-11; example 1 * | 1,6,8-15 | |

**TECHNICAL FIELDS SEARCHED (IPC)**

H01M

The present search report has been drawn up for all claims

| Place of search | Date of completion of the search | Examiner |
|---|---|---|
| The Hague | 27 March 2025 | Rausch, Elisabeth |

## ANNEX TO THE EUROPEAN SEARCH REPORT
## ON EUROPEAN PATENT APPLICATION NO.

EP 24 21 1493

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | | Publication date | Patent family member(s) | | Publication date |
|---|---|---|---|---|---|
| US 2015333309 | A1 | 19-11-2015 | CN | 103956448 A | 30-07-2014 |
| | | | JP | 6050797 B2 | 21-12-2016 |
| | | | JP | 2015220223 A | 07-12-2015 |
| | | | US | 2015333309 A1 | 19-11-2015 |
| CN 108242522 | B | 03-09-2021 | NONE | | |
| US 2022367910 | A1 | 17-11-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020190046237